# EUROPEAN PATENT SPECIFICATION

(11) **EP 3 132 305 B1**
(45) Date of publication and mention of the grant of the patent: **20.03.2019**
(21) Application number: 15809888.9
(22) Date of filing: 08.04.2015
(51) Int. Cl.: G02B 27/22, H04N 13/00, G06F 1/16

(54) **GLASSES-FREE 3D DISPLAY MOBILE DEVICE, SETTING METHOD OF THE SAME, AND USING METHOD OF THE SAME**
MOBILE VORRICHTUNG MIT GLASFREIER 3D-ANZEIGE, EINSTELLVERFAHREN DAFÜR UND VERWENDUNGSVERFAHREN DAFÜR
DISPOSITIF MOBILE D'AFFICHAGE 3D SANS LUNETTES, SON PROCÉDÉ DE RÉGLAGE, ET SON PROCÉDÉ D'UTILISATION

(30) Priority: 18.06.2014 US 201462013836 P; 01.10.2014 KR 20140132660
(43) Date of publication of application: 22.02.2017
(60) Divisional application: 19155000.3
(73) Proprietor: Samsung Electronics Co., Ltd., Gyeonggi-do 16677 (KR)
(72) Inventor: SHIN, Yoon-cheol, Seongnam-si, Gyeonggi-do 463-885 (KR); LEE, Won-jun, Seongnam-si, Gyeonggi-do 463-786 (KR)
(74) Representative: Appleyard Lees IP LLP
(86) International application number: PCT/KR2015/003544
(87) International publication number: WO 2015/194749

(56) References cited:
- KR-A- 20050 089 179
- KR-A- 20120 079 777
- KR-B1- 101 227 847
- US-A1- 2010 253 768
- US-A1- 2012 313 840
- US-A1- 2013 058 016
- US-A1- 2013 187 961
- US-A1- 2014 098 170

## Description

### [Technical Field]

Apparatuses and methods consistent with exemplary embodiments relate to a glasses-free three-dimensional (3D) display mobile device, and more particularly, a glasses-free 3D display mobile device using a 3D viewing cover in the form of removable accessory.

### [Background Art]

Autostereoscopic three-dimensional (3D) displays allow a user to see three-dimensional images (namely, stereoscopic images) through a method of forming different viewing areas for a user s eyes by using a three-dimensional film, such as a parallax barrier, a lenticular lens, etc., without using a pair of 3D glasses.

Generally, a related art method for implementing the autostereoscopic three-dimensional display in mobile devices, such as smart phones, tablet computers, etc., includes a method of installing a three-dimensional film integrally within the display of the mobile device, and a method of forming the three-dimensional film as a device that can be detachable to the top surface of the display of the mobile device.

US 2010/0253768 describes an apparatus and method for generating and displaying a stereoscopic image on a mobile computing device. The apparatus includes an autostereoscopic overlay which is secured over at least a portion of the screen of the mobile computing device, such as by using a case. Computer-readable instructions are executed on the mobile computing device to align two captured images, if necessary, and interlace them into an interlaced image for subsequent display to the screen of the mobile computing device.

US 2012/0313840 describes an information processing apparatus that determines whether an autostereoscopic panel is attached to a display, and controls the display to display a two-dimensional image or three-dimensional image based on the determination.

KR 10-2011-0001158 describes a sheet apparatus for viewing 3D images provided to view output images from a Smart phone or a tablet PC, etc in 3D images without polarized glasses. The sheet apparatus is formed on a front side of a 3D image outputting portable device. The 3D image outputting portable device alternatively outputs line images for a left eye and the line images for a right eye on one screen line-by-line. A 3D image viewing sheet turns an optical path of the line images for the left-eye to face the left-eye of a viewer and turns the optical path of the line images for the right eye to the right eye. A sheet adhering member attaches or separates the 3D image viewing sheet to/from a front side of a 3D image outputting device.

The method of installing the three-dimensional film integrally with the display of the mobile device installs the film only for three-dimensional images (3D images), and therefore has a problem that the image quality decreases when viewing two-dimensional images (2D images).

However, the method of forming the three-dimensional film to be detachable to the display of the mobile device can selectively view one of the three-dimensional image and the two-dimensional image so that the problem of the image quality of the two-dimensional image being decreased is resolved. However, the method has a problem that, whenever using the detachable film, a user must adjust a coupling between the three-dimensional film and the mobile device to be tailored to the user's own eyes in order to view an optimized three-dimensional image.

### [Disclosure]

### [Technical Problem]

Aspects of one or more exemplary embodiments overcome the above drawbacks and other problems associated with the related art methods. Aspects of one or more exemplary embodiments provides a glasses-free 3D display mobile device with a cover that can be removed from a display of the mobile device, and does not require another set-up process for later use after a first set-up is completed, a setting method of the same, and a using method of the same.

### [Technical Solution]

According to an aspect of an exemplary embodiment, there is provided a glasses-free three-dimensional (3D) display device as set out in accompanying claim 1.

The 3D viewing cover may further include a double-sided tape configured to fix the buffer member to the cover frame.

The 3D viewing cover may further include a double-sided tape configured to fix the three-dimensional film to the buffer member.

The cover frame may include at least one hole around the opening, and the at least one hole may be at a position corresponding to an image capturing device of the display device.

When the 3D viewing cover is mounted on the display device, the buffer member may be compressed in a thickness direction of the buffer member, and when the 3D viewing cover is separated from the display device, a thickness of the buffer member may be expanded and restored to an original thickness.

The cover frame may include a fastening portion detachably coupled to the display device, and a distance between a leading end of the fastening portion and the three-dimensional film may be less than a thickness of the display device.

The 3D viewing cover may further include a secondary buffer member between the cover frame and the transparent plate.

The 3D viewing cover may be coupled to the display device by an elastic force.

The cover setting program may be configured to display a cover alignment pattern on the flat panel display of the display device.

### [Description of Drawings]

These and/or other aspects and advantages will become apparent and more readily appreciated from the following description of the embodiments, taken in conjunction with the accompanying drawings of which:
FIG. 1 is a perspective view illustrating a glasses-free 3D display mobile device according to an exemplary embodiment;
FIG. 2 is an exploded perspective view illustrating a 3D viewing cover used in a glasses-free 3D display mobile device according to an exemplary embodiment;
FIG. 3 is a cross-sectional view illustrating a glasses-free 3D display mobile device according to an exemplary embodiment before a 3D viewing cover is mounted on a mobile device;
FIG. 4 is a cross-sectional view illustrating a glasses-free 3D display mobile device according to an exemplary embodiment after a 3D viewing cover is mounted on a mobile device;
FIG. 5 is a cross-sectional view illustrating a glasses-free 3D display mobile device according to an exemplary embodiment with another 3D viewing cover;
FIG. 6 is a perspective view illustrating a 3D viewing cover usable with a glasses-free 3D display mobile device according to an exemplary embodiment formed as a flip case;
FIG. 7 is a perspective view illustrating a 3D viewing cover usable with a glasses-free 3D display mobile device according to an exemplary embodiment formed as a flip cover;
FIG. 8 is a flowchart for explaining a setting method of a glasses-free 3D display mobile device in which a 3D viewing cover is mounted onto the glasses-free 3D display mobile device and is set;
FIG. 9 is a view illustrating a location relationship between a user and a glasses-free 3D display mobile device when performing a setting method of the glasses-free 3D display mobile device;
FIGS. 10A, 10B, and 10C are views illustrating cover alignment patterns which are displayed on a glasses-free 3D display mobile device when performing a setting method of the glasses-free 3D display mobile device;
FIG. 11 is a view illustrating a setting parameter changing screen that can change setting parameters of a cover alignment pattern when performing a setting method of a glasses-free 3D display mobile device;
FIG. 12 is a flowchart illustrating a user adding method of adding a user to a glasses-free 3D display mobile device after a 3D viewing cover is mounted onto the glasses-free 3D display mobile device; and
FIG. 13 is a flowchart illustrating a using method of a glasses-free 3D display mobile device.

### [Best Mode]

Hereinafter, exemplary embodiments will be described in detail with reference to the accompanying drawings. Throughout the drawings, like reference numerals will be understood to refer to like parts, components and structures.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Hereinafter, expressions such as "at least one of," when preceding a list of elements, modify the entire list of elements and do not modify the individual elements of the list.

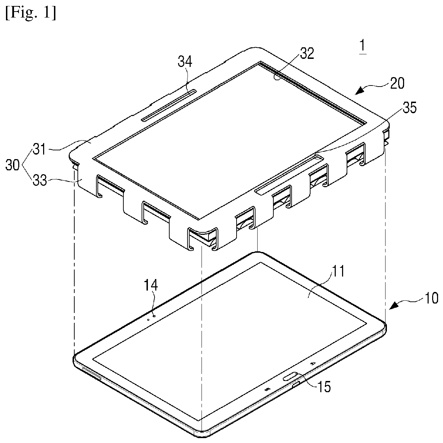

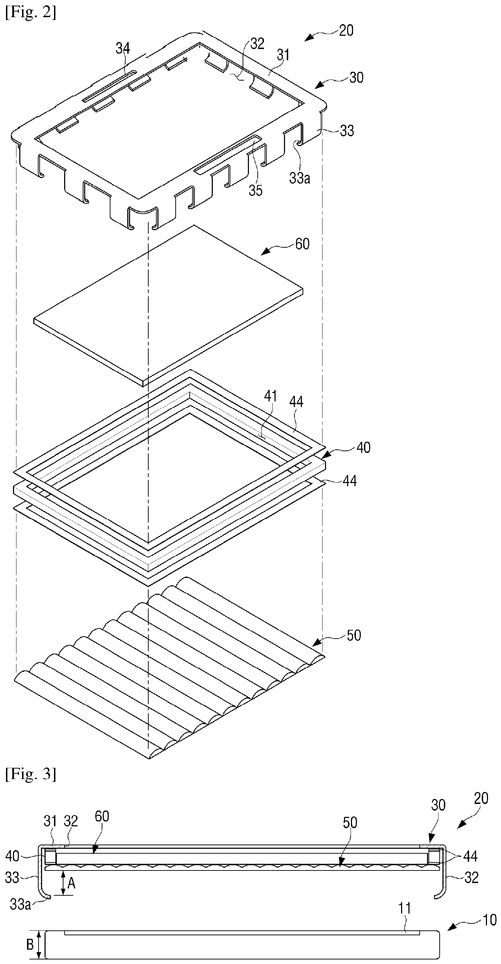

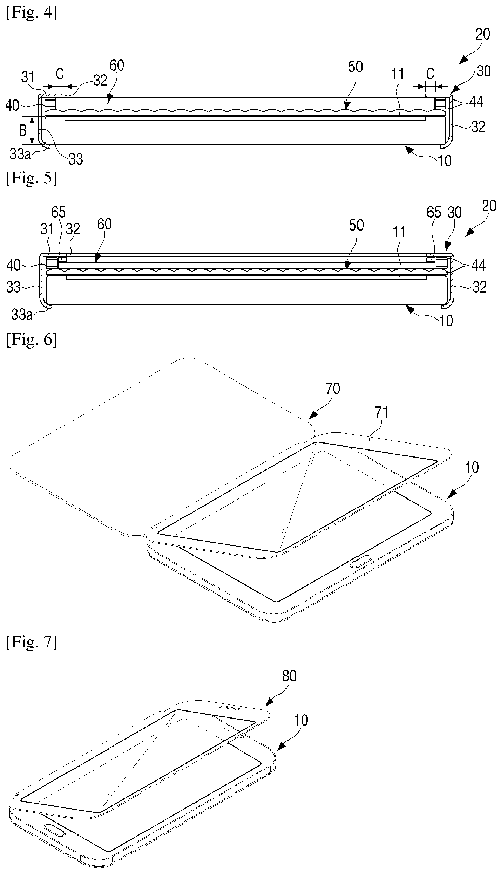

FIG. 1 is a perspective view illustrating a glasses-free 3D display device (e.g., a glasses-free 3D display mobile device 1) according to an exemplary embodiment, and FIG. 2 is an exploded perspective view illustrating a 3D viewing cover 20 used in a glasses-free 3D display mobile device 1 according to an exemplary embodiment. FIG. 3 is a cross-sectional view illustrating a glasses-free 3D display mobile device 1 according to an exemplary embodiment before a 3D viewing cover 20 is mounted on a mobile device 10. FIG. 4 is a cross-sectional view illustrating a glasses-free 3D display mobile device 1 according to an exemplary embodiment after a 3D viewing cover 20 is mounted on a mobile device 10.

Referring to FIGS. 1 to 3, a glasses-free 3D display mobile device 1 according to an exemplary embodiment includes a mobile device 10 and a 3D viewing cover 20.

The mobile device 10 is provided with (i.e., includes) a flat panel display 11 where images are displayed, and a device (e.g., housing, frame, main body, etc.) that a user can carry. The mobile device 10 may include cellular phones, smart phones, tablet computers, notebook computers, net-book computers, e-book terminals, navigations, portable multimedia players (PMPs), digital multimedia broadcasting (DMB) terminals, personal digital assistants (PDAs), etc. The flat panel display 11 may include a touch screen.

Also, the mobile device 10 may include a controller and a storage unit (e.g., storage) which are disposed inside a main body. The controller controls the overall operation of the mobile device 10, and may output 2D images or 3D images to the flat panel display 11. In addition, the controller controls the mobile device 10 according to user commands inputted by an input unit such as a touch screen.

The storage unit stores various data such as 2D images, 3D images, etc. Various application programs that can be controlled by the controller may be installed in the storage unit. The controller may be configured by a variety of memories. Accordingly, a cover setting program for setting the 3D viewing cover 20 according to preferences of the user and a 3D viewing program used to view 3D images using the 3D viewing cover 20 may be installed in the mobile device 10. These programs will be described in detail below. In addition, the controller and the storage unit of the mobile device 10 according to an exemplary embodiment may be the same as or similar to the controller and the storage unit of a related mobile device.

The 3D viewing cover 20 is detachably mounted onto a top surface of the flat panel display 11 of the mobile device 10. If the 3D viewing cover 20 is mounted onto the mobile device 10, the user can view in three dimensions the image that is being displayed on the flat panel display 11. Also, if the 3D viewing cover 20 is removed from the mobile device 10, the user can view a 2D image that is being displayed on the flat panel display 11 with no image degradation.

Referring to FIGS. 2 and 3, the 3D viewing cover 20 may include a cover frame 30, a buffer member 40, a three-dimensional film 50, and a transparent plate 60.

The cover frame 30 is formed (e.g., provided) to be coupled to the mobile device 10, and is provided with an opening 32 which corresponds to the size and shape of the flat panel display 11 of the mobile device 10 in a center portion of the cover frame 30. The cover frame 30 may be configured to be coupled elastically to a housing constituting the main body of the mobile device 10 and supports the flat panel display 11. The cover frame 30 includes a frame portion 31 formed to have a size corresponding to the front surface of the mobile device 10, that is, one surface of the mobile device 10 in which the flat panel display 11 is disposed and provided with the opening 32 corresponding to the flat panel display 11. The cover frame 30 further includes a fastening portion 33 that allows the cover frame 30 to be detachably coupled to the mobile device 10.

The frame portion 31 may be formed of a rigid body that stably supports the three-dimensional film 50 and is difficult to deform. Also, the frame portion 31 of the cover frame 30 may be provided with at least one hole 34 and 35 formed around the opening 32. The at least one hole 34 and 35 may be formed, for example, at a position corresponding to a lens portion of an image capturing device (e.g., a camera unit 14 or a camera) that is exposed on the front surface of the mobile device 10 or a home button 15 of the mobile device 10 around the frame portion 31.

The fastening portion 33 may be formed of (e.g., include) an elastic material. The fastening portion 33 may be formed to project from four sides of the frame portion 31 substantially perpendicular to the frame portion 31 and to be coupled to the bottom surface of the housing of the mobile device 10 by the elastic force. Accordingly, if the user applies a certain force to a front or leading end 33a of the fastening portion 33 that presses the bottom surface of the mobile device 10, the fastening portion 33 may be separated from the mobile device 10. If the fastening portion 33 is separated from the mobile device 10, the cover frame 30 may be removed from the mobile device 10. At least one fastening portion 33 may be formed on each of the four sides of the frame portion 31. In the present exemplary embodiment, as illustrated in FIGS. 1 and 2, a plurality of fastening portions 33 are formed on each of the four sides of the frame portion 31. In the present exemplary embodiment, the fastening portion 33 is formed of an elastic material so that the cover frame 30 is disposed on the mobile device 10 by the elastic force. However, it is understood that one or more other exemplary embodiments are not limited thereto. The fastening portion 33 may be configured in a variety of methods as long as the fastening portion 33 fixes the cover frame 30 to the mobile device 10 such that the cover frame 30 may be stabilized, held, or prevented from moving. For example, the fastening portion 33 according to another exemplary embodiment secures the cover frame 30 to the mobile device 10 by using a screw fastening. Additionally, while in the present exemplary embodiment the fastening portion 33 is provided on all four sides of the frame portion 31, it is understood that one or more other exemplary embodiments are not limited thereto. For example, according to one or more other exemplary embodiments, the fastening portion 33 may be provided on one or some, but not all, sides of the frame portion 31.

The buffer member 40 may be disposed around the opening 32 on the inner surface of the cover frame 30. The buffer member 40 is formed of an elastic member, the thickness of which decreases when a force is applied in a vertical direction, namely, in the direction of the thickness of the buffer member 40, and which is restored to its original state when the force is removed. The buffer member 40 is fixed to the bottom surface of the frame portion 31 of the cover frame 30. The buffer member 40 may be fixed to the frame portion 31 of the cover frame 30 by double-sided tape, adhesive, or the like. In the present exemplary embodiment, as illustrated in FIGS. 2 and 3, the buffer member 40 is fixed to the frame portion 31 of the cover frame 30 by double-sided tape 44. The buffer member 40 is formed to have a size that is not exposed to the opening 32 of the cover frame 30. Considering, for example, the transparent plate 60 to be described below, the width of the buffer member 40 may be formed narrower than the width of the frame portion 31. The buffer member 40 serves to absorb a manufacturing error of the cover frame 30 and the mobile device 10.

The three-dimensional film 50 allows a user to see a stereoscopic image, namely, a three-dimensional image by forming different viewing areas for user's eyes. A parallax barrier, a lenticular lens, or the like may be used as the three-dimensional film 50.

The three-dimensional film 50 is formed of a size that can cover the flat panel display 11 of the mobile device 10 and is fixed to the buffer member 40. In detail, one surface of the buffer member 40 is fixed to the inner surface of the cover frame 30, and the three-dimensional film 50 is fixed to the other surface of the buffer member 40. Accordingly, the three-dimensional film 50 is fixed to the inside of the cover frame 30 by the buffer member 40, and covers the opening 32 of the cover frame 30. Therefore, when the cover frame 30 is fixed to the mobile device 10, the three-dimensional film 50 is in contact with the top surface of the flat panel display 11 of the mobile device 10, and when the cover frame 30 is separated from the mobile device 10, the three-dimensional film 50 is removed from the mobile device 10. The three-dimensional film 50 may be fixed to the buffer member 40 by double-sided tape, adhesive, or the like. In the present exemplary embodiment, the three-dimensional film 50 is fixed to the buffer member 40 by double-sided tape 44.

The transparent plate 60 is disposed in a space between the frame portion 31 of the cover frame 30 and the three-dimensional film 50, and presses the three-dimensional film 50 against the flat panel display 11 of the mobile device 10. In detail, when the cover frame 30 is mounted onto the mobile device 10, the frame portion 31 of the cover frame 30 presses the margin of the transparent plate 60. As a result, the three-dimensional film 50 is in close contact with the flat panel display 11 of the mobile device 10 as a result of pressure from the transparent plate 60. A distance (A in FIG. 3) between the leading end 33a of the fastening portion 33 of the cover frame 30 and the bottom surface of the three-dimensional film 50 is formed to be smaller than the thickness (B in FIG. 3) of the mobile device 10. Also, the transparent plate 60 is formed to have a size larger than the size of the opening 32. The contact width (C in FIG. 4) between the transparent plate 60 and the frame portion 31 of the cover frame 30 may be determined such that the frame portion 31 of the cover frame 30 can apply a force evenly to the whole transparent plate 60. Also, the thickness of the transparent plate 60 may be determined such that, when the cover frame 30 is coupled to the mobile device 10, the frame portion 31 of the cover frame 30 is enough to press the transparent plate 60.

According to another exemplary embodiment, as illustrated in FIG. 5, a secondary buffer member 65 may be disposed between the top surface of the transparent plate 60 and the frame portion 31 of the cover frame 30. When the cover frame 30 is mounted onto the mobile device 10, the secondary buffer member 65 is pressed by the transparent plate 60, and when the cover frame 30 is removed from the mobile device 10, the secondary buffer member 65 is restored to an original state. The secondary buffer member 65 is formed to have a width smaller than the contact width C (see FIG. 4) of the transparent plate 60. Accordingly, the secondary buffer member 65 does not interfere with viewing three-dimensional images through the three-dimensional film 50. The secondary buffer member 65 may be fixed to the perimeter of the opening 32 of the frame portion 31 of the cover frame 30. Accordingly, when the cover frame 30 is not mounted onto the mobile device 10, the secondary buffer member 65 may prevent the transparent plate 60 from moving between the three-dimensional film 50 and the frame portion 31 of the cover frame 30. Also, the transparent plate 60 may be disposed so as to be fixed to the secondary buffer member 65.

Accordingly, when the 3D viewing cover 20 is mounted onto the mobile device 10, the three-dimensional film 50 is positioned on the upper side of the flat panel display 11 of the mobile device 10. Therefore, the user can view three-dimensional images being displayed on the flat panel display 11 of the mobile device 10. At this time, since the three-dimensional film 50 is in close contact with the flat panel display 11 of the mobile device 10 due to the buffer member 40 and the transparent plate 60 of the 3D viewing cover 20, even if there are manufacturing tolerances in the mobile device 10 and the 3D viewing cover 20, the three-dimensional film 50 of the 3D viewing cover 20 may always be in close contact with the flat panel display 11 of the mobile device 10 when mounted on the mobile device 10.

In the above description, the 3D viewing cover 20 is configured in the shape of a top cover that can be removably mounted onto the top surface of the mobile device 10. However, it is understood that the shape of the 3D viewing cover 20 is not limited thereto in one or more other exemplary embodiment. The 3D viewing cover 20 may be configured in a variety of forms to be detachably disposed on the mobile device 10.

Even if the 3D viewing cover 20 is configured in the form of a top cover as shown in the above-described exemplary embodiment, the 3D viewing cover 20 may be formed to be mounted onto both the front surface (a surface where the flat panel display 11 is disposed) and the back surface of the mobile device 10. In this case, when viewing the three-dimensional images, the 3D viewing cover 20 may be mounted onto the front surface of the mobile device 10, and when not viewing the three-dimensional images, the 3D viewing cover 20 may be mounted onto the rear surface of the mobile device 10.

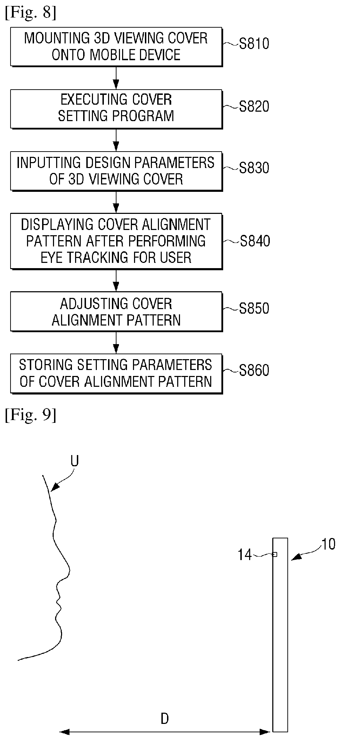

According to another exemplary embodiment, as illustrated in FIG. 6, the 3D viewing cover may be formed in the shape of a flip case. A flip case 70 as illustrated in FIG. 6 is formed such that a three-dimensional film 71 is installed in the middle of the flip case 70, and, when viewing three-dimensional images, the three-dimensional film 71 is covered and fixed to the flat panel display of the mobile device 10. According to one or more other exemplary embodiments, the flip case 70 may additionally include one or more fastening portions (such as those described above with reference to FIGS. 1 to 5) on each of one or more sides of a frame portion of the 3D film 71. Additionally, the viewing cover 20 as illustrated in any one of FIGS. 1 to 5 (or further modified, e.g., to include no fastening portions 33 or fastening portions 33 on less than all four sides of the frame portion 31) may be implemented as a flip cover alone (e.g., similar to flip cover 80 of FIG. 8) or may be implemented in the flip case 70 of the exemplary embodiment of FIG. 7 in place of the 3D film 71.

According to another exemplary embodiment, as illustrated in FIG. 7, the 3D viewing cover may be formed in the shape of a flip cover 80. A flip cover 80 is formed such that a three-dimensional film is attached to the flip cover 80, and, when the mobile device 10 is covered by the flip cover 80, a user can view three-dimensional images being displayed on the flat panel display of the mobile device 10.

A cover setting program is installed and executed by a controller of the mobile device 10, and allows settings for the 3D viewing cover 20 to be set according to each user. Users who use the 3D viewing cover 20 for the first time may initially (and not again thereafter) configure the settings for the 3D viewing cover 20 in order to achieve the optimum performance of the 3D viewing cover 20. At this time, the cover setting program executed by the controller of the mobile device 10 is used. The mobile device 10 and the 3D viewing cover 20 have a predetermined range of manufacturing tolerances. In particular, the 3D viewing cover 20 may have different design parameters due to the nature of the three-dimensional film 50, respectively. The design parameters of the 3D viewing cover 20 may include a slanted angle, a rendering pitch, an offset, etc., of the three-dimensional film 50.

Accordingly, the cover setting program may provide an input window for inputting and storing the design parameters of the 3D viewing cover 20 in the storage unit of the mobile device 10.

Also, the cover setting program may calculate a distance D (see FIG. 9) between the mobile device 10 and a user's eyes by controlling a camera unit 14 disposed in the mobile device 10 to perform eye tracking of the user's eyes. The eye tracking may refer to a method that recognizes the user's face from an image taken with the camera unit 14 disposed in the front surface of the mobile device 10, and recognizes a position value of the user's eyes from the user's face. Accordingly, if the position value of the user's eye is known, the cover setting program can calculate the distance between the mobile device 10 and the user's eyes. The eye tracking can use a related art method.

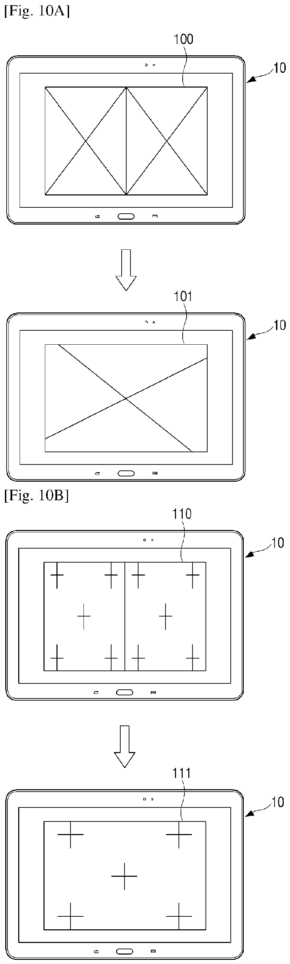

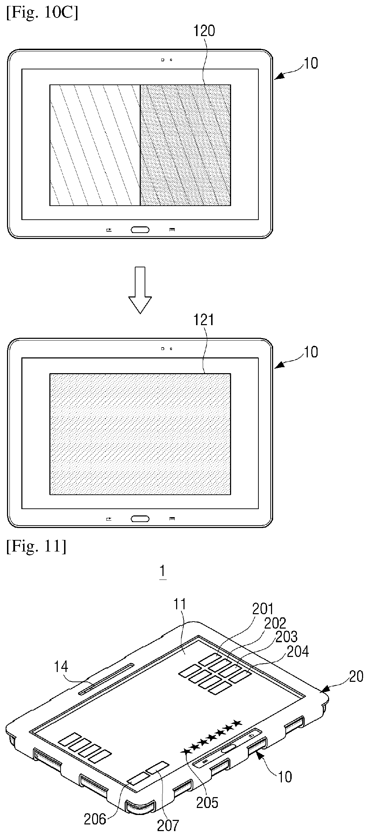

The cover setting program forms cover alignment patterns, and displays the cover alignment patterns on the flat panel display 11 of the mobile device 10. The cover setting program can generate various shapes of cover alignment patterns as illustrated in FIGS. 10A, 10B, and 10C. The cover setting program forms or obtains cover alignment patterns that a user can recognize as a three-dimensional image by using the distance between the mobile device 10 and the user's eyes calculated through the eye tracking and the input design parameters of the 3D viewing cover 20, and then, outputs the cover alignment patterns to the flat panel display 11 of the mobile device 10. At this time, since the design parameters that the cover setting program uses to form the cover alignment patterns are changed according to the distance D between the mobile device 10 and the user's eyes, the setting parameters of the cover alignment patterns, e.g., the slanted angle, the rendering pitch, the offset, etc., used for forming the cover alignment patterns are different from the design parameters of the 3D viewing cover 20. The cover setting program is configured to store the setting parameters of the cover alignment patterns in the storage unit of the mobile device 10.

Also, the cover setting program may be configured such that, when the user performs an input for changing or modifying the displayed cover alignment patterns (e.g., when the user touches the cover alignment patterns displayed on the flat panel display 11 of the mobile device 10 so as to be changed), the setting parameters of the cover alignment patterns are changed.

Accordingly, when first using the 3D viewing cover 20, the user can set the 3D viewing cover 20 in accordance with the user's own preferences by using the cover setting program installed in the mobile device 10.

Subsequently, even if the user separates the 3D viewing cover 20, and then re-mounts the 3D viewing cover 20 onto the mobile device 10 in order to use the mobile device 10, the mobile device 10 outputs three-dimensional images using the setting parameters and the distance between the mobile device 10 and the user's eyes calculated by using the eye tracking so that the user can view the three-dimensional images without additional settings being input for the 3D viewing cover 20.

Hereinafter, a setting method of a glasses-free 3D display mobile device will be described in detail with reference to FIGS. 8, 9, and 10A to 10C.

FIG. 8 is a flowchart for explaining a setting method of a glasses-free 3D display mobile device 1 after a 3D viewing cover 20 is mounted onto the glasses-free 3D display mobile device 1. FIG. 9 is a view illustrating a location relationship between a user and a glasses-free 3D display mobile device 1 when performing a setting method of the glasses-free 3D display mobile device 1. FIGS. 10A, 10B, and 10C are views illustrating cover alignment patterns which are displayed on a glasses-free 3D display mobile device 1 when performing a setting method of the glasses-free 3D display mobile device 1.

The setting method of the glasses-free 3D display mobile device 1 may include a cover mounting operation for mounting the 3D viewing cover 20 onto the mobile device 10, a parameter setting operation for determining the setting parameters of the 3D viewing cover 20 based on a user, and a storing operation for storing the setting parameters of the 3D viewing cover 20 in the mobile device 10.

Hereinafter, operations of the setting method of the glasses-free 3D display mobile device will be described in detail with reference to FIG. 8.

Referring to FIG. 8, a user mounts a 3D viewing cover 20 to be used onto the mobile device 10 (operation S810). At this time, since the 3D viewing cover 20 is provided with an elastic fastening portion 33, the 3D viewing cover 20 may be detachably mounted onto the mobile device 10. When the 3D viewing cover 20 is mounted on the mobile device 10, the three-dimensional film 50 is in close contact with the flat panel display 11 of the mobile device 10.

The user performs the parameter setting operation. In detail, the user executes the cover setting program installed in the controller of the mobile device 10 (operation S820). The cover setting program is provided with the 3D viewing cover 20, and may be configured to be installed in the mobile device 10 by the user, a service provider, a manufacturer, etc.

The user inputs the design parameters of the 3D viewing cover 20 mounted on the mobile device 10 into the cover setting program (operation S830). For example, the cover setting program may output an input window through which the user can selectively input the design parameters of the 3D viewing cover 20 to the flat panel display 11 of the mobile device 10. In this case, the user may input the design parameters of the 3D viewing cover 20 by touching the flat panel display 11 composed of a touch screen, by manipulating physical buttons on the mobile device 10, by inputting a gesture or voice input, etc. The cover setting program may store the input design parameters in the storage unit of the mobile device 10. The design parameters of the 3D viewing cover 20 may be provided with the 3D viewing cover 20.

The cover setting program performs the eye tracking for the user's face, and displays cover alignment patterns on the flat panel display 11 of the mobile device 10 according to the eye tracking (operation S840).

The operation of displaying cover alignment patterns includes calculating a distance from the mobile device 10 to the user's eyes by performing the eye tracking for the user's face, generating cover alignment patterns by using the distance from the mobile device 10 to the user's eyes and the design parameters of the 3D viewing cover 20 inputted by the user, and displaying the generated cover alignment patterns on the flat panel display 11.

In the operation of calculating a distance from the mobile device 10 to the user's eyes, the cover setting program controls the camera unit 14 of the mobile device 10 to perform the eye tracking. The eye tracking photographs or captures an image of a user to form a user's image, recognizes a user's face U from the photographed user's image, and calculates a position value of the user's eyes from the recognized user's face U. Then, the cover setting program calculates the distance D between the mobile device 10 and the user's eyes as illustrated in FIG. 9 by using the position value of the user's eyes.

In the operation of generating cover alignment patterns and displaying the generated cover alignment patterns on the flat panel display 11, the cover setting program generates a cover alignment pattern image using the distance D between the mobile device 10 and the user's eyes calculated in the previous operation and the design parameters of the 3D viewing cover 20 inputted by the user as a reference. The cover setting program may alternatively obtain the cover alignment pattern images from among pre-stored pattern images that are previously stored in the mobile device 10 or in an external device. At this time, the cover setting program may output various types of cover alignment pattern images to the flat panel display 11. Examples of the cover alignment pattern image are illustrated in FIGS. 10A, 10B, and 10C.

The cover setting program forms a pattern image for the left eye and a pattern image for the right eye 100, and displays the pattern image for the left eye and the pattern image for the right eye 100 on the flat panel display 11 of the mobile device 10. If the setting parameters of the cover alignment patterns are optimized to or set for the user's eyes, the user can view the cover alignment pattern image that is illustrated at the bottom of FIG. 10A in a three-dimensional form through the 3D viewing cover 20. For reference, the image that is illustrated at the top of FIG. 10A is not an actual image that is output through the flat panel display 11 of the mobile device 10 and which the user can see, but is a virtual image of the pattern image for the left eye and the pattern image for the right eye 100 formed by the cover setting program.

If the cover alignment pattern image that the user views through the 3D viewing cover 20 is not viewed clearly (e.g., if lines are disconnected), unlike the figure as illustrated at the bottom of FIG. 10A, the user may adjust the cover alignment pattern image (operation S850). If the separation of the pattern image for the left eye and the pattern image for the right eye is inaccurate and cross-talk occurs, the cover alignment pattern image is not viewed clearly unlike the figure as illustrated at the bottom of FIG. 10A. In this case, the user may adjust the cover alignment pattern image 101 so as to be seen clearly like the figure as illustrated at the bottom of FIG. 10A by touching the cover alignment pattern image 101 that is seen through the 3D viewing cover 20 so that the cover alignment pattern image 101 is moved or rotated.

FIGS. 10B and 10C illustrate a cover alignment pattern image which is the form different from the cover alignment pattern image 101 of FIG. 10A, respectively. In FIGS. 10B and 10C, the cover alignment pattern images 110 and 120 which are illustrated at the top thereof are not an image that is output through the flat panel display 11 of the mobile device 10 and which the user can see but a virtual image of the pattern image for the left eye and pattern image for the right eye formed by the cover setting program. The cover alignment pattern images 111 and 121 which are illustrated at the bottom thereof are three-dimensional cover alignment pattern images which the user can see through the 3D viewing cover 20.

If the user adjusts the cover alignment pattern images 101, 111, and 121 displayed on the flat panel display 11 of the mobile device 10, the values of the setting parameters of the cover alignment patterns are changed. For example, values of the slanted angle, the rendering pitch, the offset, etc., constituting the setting parameters are changed.

In the above description, a method of adjusting the values of the setting parameters by touching the cover alignment pattern image displayed on the flat panel display 11 of the mobile device 10 has been described. However, it is understood that the values of the setting parameters of the cover alignment patterns may be adjusted in different ways in one or more other exemplary embodiments. For example, the values of the setting parameters of the cover alignment patterns may be adjusted through a setting parameter changing screen.

FIG. 11 is a view illustrating a setting parameter changing screen through which values of setting parameters of cover alignment patterns may be changed when performing a setting method of a glasses-free 3D display mobile device 1.

Referring to FIG. 11, the setting parameter changing screen for the 3D viewing cover 20 may include a slanted angle setting button 201, a rendering pitch setting button 202, an offset setting button 203, a viewing distance setting button 204, a setting value display portion 205, a storing button 206, and a cancel button 207. If the user presses the slanted angle setting button 201, a setting value of the slanted angle is displayed in the setting value display portion 205. The user can set a desired setting value of the slanted angle by using the slanted angle setting button 201 and setting values being displayed in the setting value display portion 205. Also, a setting value of the rendering pitch may be set by using the rendering pitch setting button 202 and the setting value display portion 205. An offset setting value may be set by using the offset setting button 203 and the setting value display portion 205. The viewing distance may be set by using the viewing distance setting button 204 and the setting value display portion 205. Here, the viewing distance refers to the distance D between the mobile device 10 and the user's eyes. If the user presses the storing button 206, the setting values of the slanted angle, the rendering pitch, the offset, and the viewing distance that are set by the user are stored in the storage unit of the mobile device 10. The cancel button 207 is used when the user deletes the set values. After setting the setting parameters of the 3D viewing cover 20 as described above, the user can determine whether the setting parameters are input correctly by checking the cover alignment pattern image like the figure that is illustrated at the bottom of FIG. 10A.

After the adjustment of the cover alignment pattern image is completed, if the user presses the storing button 206 displayed on the flat panel display 11 of the mobile device 10, the cover setting program stores the setting parameters of the cover alignment patterns in the storage unit of the mobile device 10 (operation S860). The setting parameters of the cover alignment patterns that are modified and stored as described above are the setting parameters of the 3D viewing cover 20 that is suitably set to a particular user.

Furthermore, the values of the setting parameters of the 3D viewing cover 20 may vary with the body characteristics of the user. In particular, in the case of children, the values of the setting parameters may vary greatly in comparison with adults. Accordingly, even when other users use the same 3D viewing cover 20, the setting parameters of the 3D viewing cover 20 may be set on a per-user basis in order to view the optimized three-dimensional images.

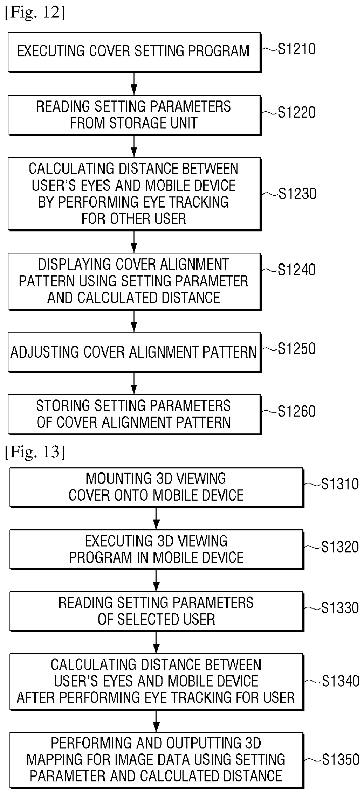

Hereinafter, a user adding method of adding another user for a 3D viewing cover 20 of a glasses-free 3D display mobile device 1 will be described with reference to FIG. 12.

FIG. 12 is a flowchart illustrating a user adding method of adding another user to use a 3D viewing cover of a glasses-free 3D display mobile device 1.

Referring to FIG. 12, if the 3D viewing cover 20 is mounted onto the mobile device 10, another user (e.g., other than a user that has previously executed the cover setting program) executes the cover setting program installed in the mobile device 10 (operation S1210). If the 3D viewing cover 20 is not mounted onto the mobile device 10, the user mounts the 3D viewing cover 20 onto the mobile device 10, and executes the cover setting program.

The cover setting program reads the setting parameters of the 3D viewing cover 20 stored in the storage unit of the mobile device 10 (operation S1220). After that, the cover setting program performs the eye tracking for the face of the other user and calculates the distance between the eyes of the other user and the mobile device 10 (operation S1230). The cover setting program may calculate the distance between the mobile device 10 and the eyes of the other user by performing the eye tracking in the same or similar manner as that of the setting method of the glasses-free 3D display mobile device 1 as described above.

After calculating the distance between the mobile device 10 and the eyes of the other user, the cover setting program generates a cover alignment pattern image using the setting parameters read in the storage unit of the mobile device 10 and the distance between the mobile device 10 and the eyes of the other user calculated in the previous operation, and outputs the cover alignment pattern image to the flat panel display 11 of the mobile device 10 (operation S1240). Then, the other user checks the displayed cover alignment pattern image to determine whether the separation of the pattern image for the left eye and the pattern image for the right eye is accurate, and whether crosstalk occurs. If the cover alignment pattern image that the other user views through the 3D viewing cover 20 is not seen clearly (e.g. is lines are disconnected), unlike the cover alignment pattern image as illustrated at the bottom of each of FIGS. 10A, 10B, and 10C, the user adjusts the cover alignment pattern image by, for example, touching the flat panel display 11 of the mobile device 10 (operation S1250).

After the adjustment of the cover alignment pattern image is completed, the other user stores the setting parameters of the cover alignment patterns in the storage unit of the mobile device 10 with a name or identifier that can be distinguished from setting parameters for the user that has already been set (operation S1260). The added other user can view the three-dimensional images using his or her stored setting parameters of the 3D viewing cover 20 at a later time.

As described above, the setting parameters are stored on a per-user basis according to the present exemplary embodiment. In this regard, there may be stored default setting parameters for any user for which specific setting parameters are not stored, in addition to setting parameters stored for specific users.

Hereinafter, a using method of a glasses-free 3D display mobile device 1 to view three-dimensional images will be described in detail with reference to FIG. 13.

FIG. 13 is a flowchart illustrating a using method of a glasses-free 3D display mobile device.

Referring to FIG. 13, a user mounts the 3D viewing cover 20 onto the mobile device 10 (operation S1310). Accordingly, the three-dimensional film 50 of the 3D viewing cover 20 is positioned on the top of the flat panel display 11 of the mobile device 10.

The user executes a 3D viewing program installed in the mobile device 10 (operation S1320). The 3D viewing program may be provided with the 3D viewing cover 20, and be configured to be installed in the mobile device 10 by the user, a service provider, a content provider, a manufacturer, etc.

In the operation of executing a 3D viewing program, the 3D viewing program displays a list of users that have stored the setting parameters of the 3D viewing cover 20 in the storage unit of the mobile device 10. Accordingly, the user selects his or her name from the list of users.

If the user is selected, the 3D viewing program reads the setting parameters of the selected user from the storage unit of the mobile device 10 (operation S1330).

The 3D viewing program controls the camera unit 14 of the mobile device 10 to perform eye tracking for the user's face, and calculates a distance between the mobile device 10 and the user's eyes (operation S1340).

The 3D viewing program performs 3D mapping for image data to be displayed by using the setting parameters of the selected user and the calculated distance between the mobile device 10 and the user's eyes. Subsequently, the 3D viewing program outputs the 3D mapped image data to the flat panel display 11 of the mobile device 10 (operation S1350).

Thus, the user can view three-dimensional images being displayed on the flat panel display 11 of the mobile device 10 through the 3D viewing cover 20.

If using the glasses-free 3D display mobile device 1 according to an exemplary embodiment as described above, the 3D viewing program outputs proper three-dimensional images by tracking the user's eyes through the eye tracking. Therefore, the user can view the optimized three-dimensional images at any location.

Also, with the glasses-free 3D display mobile device according to an exemplary embodiment, if the user initially sets the setting parameters of the 3D viewing cover only once, it is not necessary to reset the setting parameters of the 3D viewing cover when using the 3D viewing cover at a later time. Therefore, usage of the 3D viewing cover is convenient.

While exemplary embodiments have been described above, additional variations and modifications may be understood by those skilled in the art based on the present description. Therefore, it is intended that the appended claims shall be construed to include both the above exemplary embodiments and all such variations and modifications that fall within the scope of the inventive concept.

## Claims

1. A glasses-free three-dimensional (3D) display device (1) comprising:
a display device (10) comprising a flat panel display (11); and
a 3D viewing cover (20) detachably disposed on the flat panel display (11), the 3D viewing cover (20) configured to allow images displayed on the flat panel display (11) to be viewed in three dimensions,
wherein the display device (10) comprises a cover setting program executable by the display device (10) to set setting parameters of the 3D viewing cover (20) wherein the 3D viewing cover (20) comprises:
a cover frame (30) configured to be coupled to the display device (10), the cover frame (30) comprising an opening (32) corresponding to the flat panel display (11) in a center portion thereof;
a buffer member (40) around the opening on an inner surface of the cover frame (30);
a three-dimensional film (50) fixed to the inner surface of the cover frame (30) by the buffer member (40), the three-dimensional film (50) covering the opening (32); and
a transparent plate (60) between the cover frame (30) and the three-dimensional film (50) **characterized in that** the buffer member (40) is formed of an elastic member, the thickness of which decreases when a force is applied in a direction of the thickness of the buffer member (40), and which is restored to its original state when the force is removed, wherein when the 3D viewing cover is mounted on the display device, the buffer member may be compressed in a thickness direction of the buffer member, and when the 3D viewing cover is separated from the display device, a thickness of the buffer member may be expanded and restored to an original thickness and thereby the buffer member serves to absorb a manufacturing error of the cover frame (20) and the mobile device (10) so that the three-dimensional film (50) may always be in close contact with the flat panel display (11) of the device (10) when mounted on the display device (10).

2. The glasses-free 3D display device (1) of claim 1, wherein:
the cover frame (30) comprises at least one hole (34,35) around the opening (32); and
the at least one hole (34,35) is at a position corresponding to an image capturing device (14) of the display device (10).

3. The glasses-free 3D display device (1) of claim 1, wherein:
when the 3D viewing cover (20) is mounted on the display device (10), the buffer member (40) is compressed in a thickness direction of the buffer member 40); and
when the 3D viewing cover (20) is separated from the display device (10), a thickness of the buffer member (40) is expanded and restored to an original thickness.

4. The glasses-free 3D display device (1) of claim 3, wherein:
the cover frame (30) comprises a fastening portion (33) detachably coupled to the display device (10); and
a distance between a leading end of the fastening portion (33) and the three-dimensional film (50) is less than a thickness of the display device (10).

5. The glasses-free 3D display device (1) of claim 1, wherein the 3D viewing cover (20) further comprises a secondary buffer member (65) between the cover frame (30) and the transparent plate (60).

6. The glasses-free 3D display device (1) of claim 1, wherein the 3D viewing cover (20) is coupled to the display device (10) by an elastic force.

7. The glasses-free 3D display device of claim 1, wherein the cover setting program is configured to display a cover alignment pattern on the flat panel display of the display device.

## Patentansprüche

1. Dreidimensionale (3D) Anzeigevorrichtung (1) ohne Brille, umfassend:
eine Anzeigevorrichtung (10), umfassend eine Flachbildschirmanzeige (11); und
eine 3D-Sichtabdeckung (20), die abnehmbar an der Flachbildschirmanzeige (11) angeordnet ist, wobei die 3D-Sichtabdeckung (20) dazu ausgebildet ist, zu ermöglichen, Bilder, die auf der Flachbildschirmanzeige (11) angezeigt werden, in drei Dimensionen zu betrachten,
wobei die Anzeigevorrichtung (10) ein Abdeckungseinstellprogramm umfasst, das durch die Anzeigevorrichtung (10) ausführbar ist, um Einstellparameter der 3D-Sichtabdeckung (20) einzustellen, wobei die 3D-Sichtabdeckung (20) umfasst:
einen Abdeckungsrahmen (30), der dazu ausgebildet ist, mit der Anzeigevorrichtung (10) gekoppelt zu werden, wobei der Abdeckungsrahmen (30) in einem mittleren Abschnitt davon eine Öffnung (32) umfasst, die der Flachbildschirmanzeige (11) entspricht;
ein Pufferelement (40) um die Öffnung herum an einer Innenoberfläche des Abdeckungsrahmens (30);
eine dreidimensionale Folie (50), die durch das Pufferelement (40) an der Innenoberfläche des Abdeckungsrahmens (30) befestigt ist, wobei die dreidimensionale Folie (50) die Öffnung (32) überdeckt; und
eine transparente Platte (60) zwischen dem Abdeckungsrahmen (30) und der dreidimensionalen Folie (50), **dadurch gekennzeichnet, dass** das Pufferelement (40) aus einem elastischen Element gebildet ist, dessen Dicke abnimmt, wenn in einer Richtung der Dicke des Pufferelements (40) eine Kraft aufgebracht wird, und das in seinen ursprünglichen Zustand zurückversetzt wird, wenn die Kraft weggenommen wird, wobei, wenn die 3D-Sichtabdeckung an der Anzeigevorrichtung angebracht wird, das Pufferelement in einer Dickenrichtung des Pufferelements zusammengedrückt werden kann, und, wenn die 3D-Sichtabdeckung von der Anzeigevorrichtung abgenommen wird, eine Dicke des Pufferelements sich ausdehnen und zu einer ursprünglichen Dicke zurückkehren kann, und dadurch dient das Pufferelement dazu, einen Fertigungsfehler des Abdeckungsrahmens (20) und der mobilen Vorrichtung (10) auszugleichen, so dass die dreidimensionale Folie (50), wenn diese auf der Anzeigevorrichtung (10) angebracht ist, stets in engem Kontakt mit der Flachbildschirmanzeige (11) der Vorrichtung (10) sein kann.

2. 3D-Anzeigevorrichtung (1) ohne Brille nach Anspruch 1, wobei:
der Abdeckungsrahmen (30) mindestens ein Loch (34, 35) um die Öffnung (32) herum umfasst; und
das mindestens eine Loch (34, 35) an einer Position ist, die einer Bilderfassungsvorrichtung (14) der Anzeigevorrichtung (10) entspricht.

3. 3D-Anzeigevorrichtung (1) ohne Brille nach Anspruch 1, wobei:
wenn die 3D-Sichtabdeckung (20) an der Anzeigevorrichtung (10) angebracht ist, das Pufferelement (40) in einer Dickenrichtung des Pufferelements (40) zusammengedrückt wird; und
wenn die 3D-Sichtabdeckung (20) von der Anzeigevorrichtung (10) abgenommen wird, eine Dicke des Pufferelements (40) sich ausdehnt und zu einer ursprünglichen Dicke zurückkehrt.

4. 3D-Anzeigevorrichtung (1) ohne Brille nach Anspruch 3, wobei:
der Abdeckungsrahmen (30) einen Befestigungsabschnitt (33) umfasst, der mit der Anzeigevorrichtung (10) abnehmbar gekoppelt ist; und
ein Abstand zwischen einem Vorderende des Befestigungsabschnitts (33) und der dreidimensionalen Folie (50) kleiner als eine Dicke der Anzeigevorrichtung (10) ist.

5. 3D-Anzeigevorrichtung (1) ohne Brille nach Anspruch 1, wobei die 3D-Sichtabdeckung (20) ferner ein sekundäres Pufferelement (65) zwischen dem Abdeckungsrahmen (30) und der transparenten Platte (60) umfasst.

6. 3D-Anzeigevorrichtung (1) ohne Brille nach Anspruch 1, wobei die 3D-Sichtabdeckung (20) durch eine elastische Kraft mit der Anzeigevorrichtung (10) gekoppelt ist.

7. Glasfreie 3D-Anzeigevorrichtung nach Anspruch 1, wobei das Abdeckungseinstellprogramm dazu ausgebildet ist, ein Abdeckungsausrichtungsmuster auf der Flachbildschirmanzeige der Anzeigevorrichtung anzuzeigen.

## Revendications

1. Dispositif d'affichage (1) tridimensionnel (3D) sans verres comprenant :
un dispositif d'affichage (10) comprenant un affichage à panneau plat (11) ; et
un couvercle de visualisation 3D (20) disposé de manière amovible sur l'affichage à panneau plat (11), le couvercle de visualisation 3D (20) étant conçu pour permettre à des images affichées sur l'affichage à panneau plat (11) d'être visualisées en trois dimensions ;
dans lequel le dispositif d'affichage (10) comprend un programme de réglage de couvercle exécutable par le dispositif d'affichage (10) pour définir des paramètres du couvercle de visualisation 3D (20), le couvercle de visualisation 3D (20) comprenant :
un cadre de couvercle (30) conçu pour être couplé au dispositif d'affichage (10), le cadre de couvercle (30) comprenant une ouverture (32) correspondant à l'affichage à panneau plat (11) dans une position centrale de celui-ci ;
un élément tampon (40) autour de l'ouverture sur une surface interne du cadre de couvercle (30) ;
un film tridimensionnel (50) fixé à la surface interne du cadre de couvercle (30) par l'élément tampon (40), le fil tridimensionnel (50) recouvrant l'ouverture (32) ; et
une plaque transparente (60) entre le cadre de couvercle (30) et le film tridimensionnel (50), **caractérisé en ce que** l'élément tampon (40) est fait d'un élément élastique dont l'épaisseur diminue lorsqu'une force est appliquée dans la direction de l'épaisseur de l'élément tampon (40) et qui reprend son état original lorsque la force est retirée, dans lequel lorsque le couvercle de visualisation 3D est monté sur le dispositif d'affichage, l'élément tampon peut être comprimé dans la direction de l'épaisseur de l'élément tampon, et lorsque le couvercle de visualisation 3D est séparé du dispositif d'affichage, une épaisseur de l'élément tampon peut être augmentée et restaurée à une épaisseur originale, l'élément tampon servant ainsi à absorber une erreur de fabrication du cadre de couvercle (20) et du dispositif mobile (10) de sorte que le film tridimensionnel (50) soit toujours en contact étroit avec l'affichage à panneau plat (11) du dispositif (10) une fois monté sur le dispositif d'affichage (10).

2. Dispositif d'affichage 3D sans verres (1) selon la revendication 1, dans lequel :
le cadre de couvercle (30) comprend au moins un trou (34, 35) autour de l'ouverture (32) ; et
l'au moins un trou (34, 35) est situé dans une position correspondant à un dispositif de capture d'image (14) du dispositif d'affichage (10).

3. Dispositif d'affichage 3D sans verres (1) selon la revendication 1, dans lequel :
lorsque le couvercle de visualisation 3D (20) est monté sur le dispositif d'affichage (10), l'élément tampon (40) est comprimé dans la direction de l'épaisseur de l'élément tampon (40) ; et
lorsque le couvercle de visualisation 3D (20) est séparé du dispositif d'affichage (10), l'épaisseur de l'élément tampon (40) augmente et reprend son état original.

4. Dispositif d'affichage 3D sans verres (1) selon la revendication 3, dans lequel :
le cadre de couvercle (30) comprend une partie de fixation (33) couplée de manière amovible au dispositif d'affichage (10) ; et
une distance entre un bord avant de la partie de fixation (33) et le film tridimensionnel (50) est inférieure à une épaisseur du dispositif d'affichage (10) .

5. Dispositif d'affichage 3D sans verres (1) selon la revendication 1, dans lequel le couvercle de visualisation 3D (20) comprend en outre un élément tampon secondaire (65) entre le cadre de couvercle (30) et la plaque transparente (60).

6. Dispositif d'affichage 3D sans verres (1) selon la revendication 1, dans lequel le couvercle de visualisation 3D (20) est couplé au dispositif d'affichage (10) par une force élastique.

7. Dispositif d'affichage 3D sans verres (1) selon la revendication 1, dans lequel le programme de réglage de couvercle est conçu pour afficher un motif d'alignement de couvercle sur l'affichage à panneau plat du dispositif d'affichage.
